(19) Europäisches Patentamt
European Patent Office
Office européen des brevets

(11) **EP 2 484 936 A1**

(12) **EUROPEAN PATENT APPLICATION**
published in accordance with Art. 153(4) EPC

(43) Date of publication:
08.08.2012 Bulletin 2012/32

(51) Int Cl.:
*F16H 25/24* (2006.01)   *B66F 9/08* (2006.01)

(21) Application number: 10818645.3

(22) Date of filing: 19.08.2010

(86) International application number:
PCT/JP2010/064014

(87) International publication number:
WO 2011/036969 (31.03.2011 Gazette 2011/13)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(30) Priority: 28.09.2009   JP 2009221820

(71) Applicant: Hitachi Construction Machinery Co., Ltd
Tokyo 112-8563 (JP)

(72) Inventors:
• YAMADA Hiroyuki
Tokyo 100-8220 (JP)

• HAYASE Isao
Tokyo 100-8220 (JP)
• HIRAKU Kenji
Tokyo 100-8220 (JP)
• OCHIAI Masami
Tsuchiura-shi
Ibaraki 300-0013 (JP)

(74) Representative: Beetz & Partner
Patentanwälte
Steinsdorfstrasse 10
80538 München (DE)

(54)   **LINEAR ACTUATOR**

(57)   [Problem]
To prevent an eccentric load from occurring in a nut member of a linear actuator and ensure a longer service life of the nut member.

[Solution]
The nut member is coupled to a driven member by a contact force equalizing mechanism having two rotation axes which are virtually perpendicular to each other, to absorb slight inclination between the nut member and the driven member and prevent occurrence of an edge load; also the point of intersection which is obtained when the two rotation axes are projected toward a threaded shaft is set as an optimum point of application of load for the nut member to let an external force transmitted from the driven member act on the optimum point of application of load to equalize the loads applied to the contact portions between the nut member and the threaded shaft and thereby prevent an eccentric load from occurring in the nut member.

FIG.5

**Description**

TECHNICAL FIELD

The present invention relates to linear actuators which use a rotary to linear conversion mechanism having a threaded shaft and a nut member.

BACKGROUND ART

From the viewpoint of power consumption reduction and environmental load reduction by efficiency improvement, electrification of hydraulic systems has been progressing. Recently there has been a growing tendency to use such electrification technology to replace a thrust generator which has used a hydraulic cylinder in the past, by an electric linear actuator.

The electric linear actuator which has to generate a large thrust force like a hydraulic cylinder is required to withstand a large thrust force and have a long service life.

A ball screw has been put into practical use as a rotary to linear conversion mechanism required for an electric linear actuator, but when an electric linear actuator is used instead of a hydraulic cylinder, an eccentric load which occurs in the nut member may shorten the ball screw life, posing a serious problem.

This eccentric load occurs when due to a machining or fitting error, movable part backlash, etc., the nut member and the driven member coupled to the object to be driven get slightly inclined relative to each other and the contact portions shift toward the outer circumference.

If an eccentric load occurs, the loads applied to plural contact portions between the threaded shaft and the nut member become unequal and loads applied to certain contact portions become larger.

In most rotary to linear conversion mechanisms used in electric linear actuators, the threaded shaft and the nut member contact each other through rolling bodies like balls in a ball screw; however, if an eccentric load occurs in the nut member, Hertzian stress generated in a contact portion would increase, hastening flaking and shortening the life of the rotary to linear conversion mechanism.

For this reason, it is necessary to prevent an eccentric load from occurring in the nut member, namely the loads applied to contact portions between the threaded shaft and the nut member must be equalized.

In the past, the following methods for preventing an eccentric load in the nut member have been considered.

In the technique described in Patent Literature 1, a driving member and a driven member are coupled by a coupler which is comprised of cylindrical engaging members whose axes are perpendicular to each other and circular holes holding the engaging members slidably, and slight inclination between the driving member and driven member is absorbed by this coupler.

Also in the techniques of the "ball screw type moving device" described in Patent Literature 2, the "ball screw" described in Patent Literature 3, and the "ball screw device and electric opening/closing device for injection molding machine" described in Patent Literature 4, a member with an automatic alignment function is installed between the nut member and driven member of a ball screw type linear actuator.

In particular, a member with a projecting curved surface in Patent Literature 2 or a member with a spherical surface in Patent Literatures 3 and 4 absorbs the inclination between the nut member and driven member in order to prevent an eccentric load.

CITATION LIST

PATENT LITERATURE

Patent Literature 1: JP-A No. Hei03(1991)-228538
Patent Literature 2: JP-A No. 2003-307264
Patent Literature 3: JP-U No. Hei05(1993)-066360
Patent Literature 4: JP-A No. 2002-327826

SUMMARY OF THE INVENTION

PROBLEM TO BE SOLVED BY THE INVENTION

These conventional techniques can absorb the slight inclination between the nut member and driven member and let a load be applied to the center axis of the threaded shaft. However, it has been found impossible to equalize the loads applied to the plural contact portions between the threaded shaft and the nut member.

In order to further improve the life of the rotary to linear conversion mechanism, it is necessary to further reduce the unequalness which remains unsolved and further reduction of this unsolved unequalness is particularly effective for the rotary to linear conversion mechanism used in an electric linear actuator for a large thrust force.

In an ordinary rotary to linear conversion mechanism comprised of a threaded shaft and a nut member, it is presumed that an external force applied to the nut member acts on the center axis of the threaded shaft and at this moment the contact forces which are applied to the nut member as reaction forces from the contact portions between the threaded shaft and the nut member are equal.

If the contact portions are spaced at almost regular intervals in the circumferential direction on virtually concentric circles as seen in the axial direction, the point on which the resultant force of the axial components of the contact forces acts is almost on the center axis of the threaded shaft, and the contact forces are almost balanced with the external force acting on the nut member since they are identical in terms of magnitude and line of action.

However, the contact portions between the threaded shaft and the nut member are spirally arranged and are not in alignment with each other in the axial direction, so due to the transverse components of the contact forces of the contact portions, a moment around an axis perpendicular to the center axis of the threaded shaft is generated in the nut member and this remains as an unbalanced moment.

In other words, if an external force acts on the center axis of the threaded shaft, the contact forces of the contact portions would never be equal and balanced, which means that the presumption is not satisfied.

Therefore, if an external force acts on the center axis of the threaded shaft, the contact forces of the contact portions would be unequal, which would cause an eccentric load (moment load) to be generated in the nut member and shorten the life of the rotary to linear conversion mechanism.

The present invention realizes a linear actuator using a rotary to linear conversion mechanism which withstands a large thrust force and ensures a long service life, by equalizing the loads applied to the contact portions between the threaded shaft and the nut member.

SOLUTION TO PROBLEM

One approach to preventing or reducing this unbalanced moment, namely an eccentric load, may be to shift the external force applied to the nut member from the center axis of the threaded shaft by a given distance in a given radial direction. Preferably it should be applied to the optimum point of application of load.

If the loads at plural contact points are equal, the point at which the resultant force of the axial components of the contact forces is applied as reaction forces from the threaded shaft to the nut member will be virtually on the center axis of the threaded shaft.

Therefore, by shifting the point of application of external force from the center axis of the threaded shaft to generate a couple of force, the magnitude of the couple and direction of the moment can be adjusted according to the distance and direction of the shift, thereby enabling the unbalanced moment to be offset by the couple.

At this time, the loads at the contact points of the nut member are equal and balanced. In short, the loads at the contact points are equal.

The point of application of the couple (external force) at which the unbalanced moment is completely offset is the optimum point of application of load and the optimum point of application of load can be quantitatively calculated from the positional relationship of the contact portions between the threaded shaft and the nut member.

The present invention adopts the following constitution in order to equalize the loads at the contact points.

A linear actuator as a mode of the present invention includes a threaded shaft, a nut member screwed with the threaded shaft, a driven member coupled to an object to be driven, and a contact force equalizing mechanism (coupler) which couples the nut member and the driven member and has two rotation axes perpendicular to each other, and the linear actuator moves the nut member back and forth in an axial direction by rotary motion relative to the threaded shaft and gives linear motion to the object to be driven by forward and backward movements of the nut member through the contact force equalizing mechanism and the driven member.

The point of intersection obtained when the two rotation axes of the contact force equalizing mechanism are projected toward the threaded shaft is shifted from the center axis of the threaded shaft in a radial direction.

The radial direction (direction from the center axis) in which the shift should be made and the distance of the shift are approximately determined according to the positions of the contact portions between the threaded shaft and the nut member.

Slight inclination between the nut member and the driven member is absorbed by shifting the point of intersection in the radial direction in this way and letting the two rotation axes of the contact force equalizing mechanism rotate (swing).

The point of intersection obtained when the two rotation axes are projected toward the threaded shaft is a point of application of an external force which is fixed for the nut member and this point of application is adjusted to an optimum point of application of load which is determined according to the positions of the contact portions between the threaded shaft and the nut member.

This can offset an unbalanced moment which occurs in the nut member and equalize the loads applied to the contact portions and prevent or reduce an eccentric load which occurs in the nut member.

The linear actuator as a mode of the present invention is used in a way that in transmitting a load between the nut member and the driven member, it transmits a load in a direction of compression and does not transmit a load in a tensile direction.

In other words, the linear actuator as a mode of the present invention is assumed to be used, for example, so that the nut member moves up and down with respect to the threaded shaft.

Even when the linear actuator is used horizontally, a mechanism in which a load is applied by a spring, etc. from one direction of the linear actuator or a mechanism in which an L-shaped lever is formed on one side of the linear actuator is assumed.

By using this type of linear actuator in this way, the nut member and the driven member transmit an external force in one direction, namely there is no possibility that the directions of loads are different, and the optimum point of application of load for the nut member is fixed and an external force is applied to the fixed optimum point of application of load.

Also when the linear actuator is used horizontally, it is preferable that two contact force equalizing mechanisms be connected on both sides of the nut member in the directions of its forward and backward movements and the two contact force equalizing mechanisms be coupled to the same driven member.

Even when the linear actuator is not used horizontally, if loads from two directions are applied to the linear actuator, it is preferable that two contact force equalizing mechanisms be connected on both sides of the nut member in the directions of its forward and backward movements and the two contact force equalizing mechanisms be coupled to a driven member.

Due to this constitution, even if the optimum point of application of load for the nut member differs according to the direction of an external force, the position (direction) of the applied force can be changed according to the direction of the external force by the contact force equalizing mechanism which transmits it, so that the external force is applied to the optimum point of application of load regardless of the direction of the external force.

In the linear actuator as a mode of the present invention, it is particularly preferable that the threaded shaft and the nut member contact each other through a plurality of rollers rotatably supported by the nut member and constitute a roller screw mechanism based on rolling pairing.

Due to the existence of this roller screw mechanism, a roller screw, in which the roller contact portion is in line contact, can reduce Hertzian stress as compared with a ball screw in which a large Hertzian stress occurs in the point contact portion of a small ball.

In other words, the roller screw can withstand a larger thrust force if it is almost equal to the ball screw in terms of size and can be smaller if it is almost equal to the ball screw in terms of thrust resistance.

As far as the roller screw used here is concerned, it is preferable that the number of rollers which transmit a thrust load from one direction to the threaded shaft be three and they be arranged so that they are shifted about one third of the screw lead in the axial direction one by one and shifted 2/3 n [rad] in a circumferential direction one by one.

Consequently the number of contact portions between the threaded shaft and the nut member is three, so even if some dimensional error exists in a component, all rollers contact the threaded shaft without fail and can support the load.

A roller screw in which the number of rollers is three is employed and it is defined that the rotation axis of the threaded shaft is a Z axis, an axis which passes through the center of a contact portion between a central roller in the axial direction among the three rollers and the threaded shaft and is perpendicular to the Z axis is a Y axis, an axis perpendicular to both the Y axis and the Z axis is an X axis, the lead of the threaded shaft is L [mm], the lead angle of a spiral passing through a contact portion between a roller and a thread flank face is $\gamma$ [rad], and an angle which is formed by a tangent in the vicinity of a center of a contact portion between a thread flank face on a plane rotated around the Y axis by $\gamma$ from a YZ plane and a roller, and an XZ plane, is $\alpha$ [rad].

In this case, preferably the point of intersection obtained when the two rotation axes of the contact force equalizing mechanism are projected toward the threaded shaft is at a distance from the Z axis in the radial direction,

[Equation 1]

$$\frac{\sqrt{3}L}{9\sin\alpha}\sqrt{\tan^2\gamma + \cos^2\alpha}\,[mm]$$

...(Equation 1)

in which the distance is approximately expressed by the above equation, and it has an angle around the Z axis from the X axis,

[Equation 2]

$$\tan^{-1}\frac{-\cos\alpha}{\sin\alpha\sin\gamma} - \frac{\pi}{2}\,[rad]$$

...(Equation 2)

in which the angle is approximately expressed by the above equation.

By setting the position of the point of intersection in this way, the external force applied to the nut member can be made to act around the optimum point of application of load so that the contact forces between the threaded shaft and the three rollers are equalized almost completely.

In other words, the optimum point of application of load in the case of using three rollers means a point at which the loads applied to the three rollers are equal.

This type of linear actuator is particularly useful when the lead of the threaded shaft is large.

The linear actuator as a mode of the present invention may be used for lifting and lowering in an electric forklift truck.

ADVANTAGEOUS EFFECT OF INVENTION

The linear actuator which uses a rotary to linear conversion mechanism according to the present invention can be embodied as a linear actuator which withstands a large thrust force and ensures a long service life, by equalizing the loads applied to the contact portions between the threaded shaft and the nut member.

BRIEF DESCRIPTION OF THE DRAWINGS

[Fig. 1] Fig. 1 is an external view of a linear actuator.

[Fig. 2] Fig. 2 is a front view of the linear actuator shown in Fig. 1.

[Fig. 3] Fig. 3 is a left side view of a roller screw used in the linear actuator shown in Fig. 1, a front view thereof and a sectional view thereof taken along the line A-A.

[Fig. 4] Fig. 4 is a left side view, a front view, a top view, and a sectional view taken along the line B-B showing the threaded shaft and three rollers which are used in the linear actuator shown in Fig. 1.

[Fig. 5] Fig. 5 is an external view of the contact force equalizing mechanism for equalizing the loads applied to the contact portions between the threaded shaft and the nut member which are used in the linear actuator shown in Fig. 1.

[Fig. 6] Fig. 6 is an exploded view of the components of the contact force equalizing mechanism shown in Fig. 5.

[Figs. 7] Fig. 7 is a top view and a bottom view of the contact force equalizing mechanism shown in Fig. 5.

[Fig. 8] Fig. 8 is an external view of a linear actuator in a second embodiment.

[Fig. 9] Fig. 9 is a left side view and a front view of the threaded shaft and six rollers used in the linear actuator shown in Fig. 8.

[Fig. 10] Fig. 10 is an external view of a linear actuator in a third embodiment.

[Fig. 11] Fig. 11 is a side view of a forklift truck in which the linear actuator is mounted.
[Fig. 12] Fig. 12 is an enlarged view of a loading/unloading device of the forklift truck shown in Fig. 11.

## DESCRIPTION OF EMBODIMENTS

Next, the best modes for carrying out the invention will be described referring to drawings.

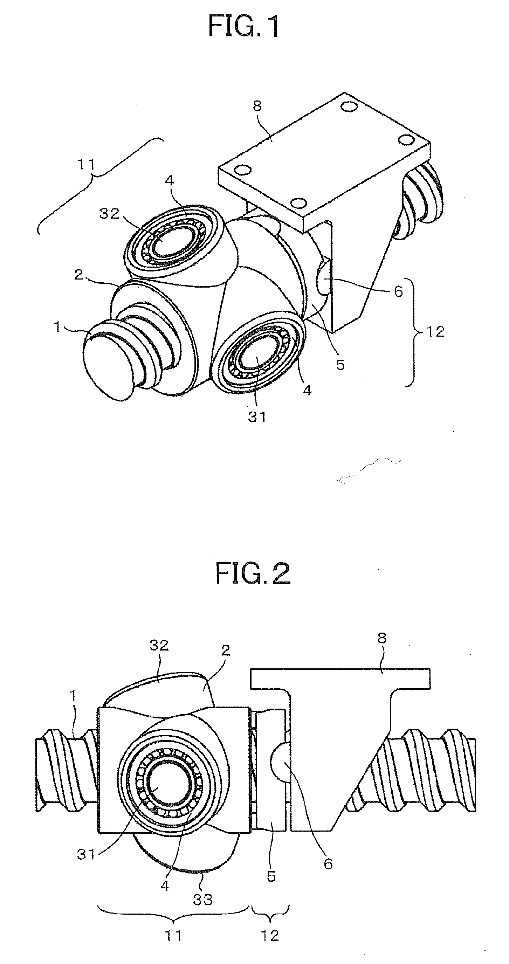

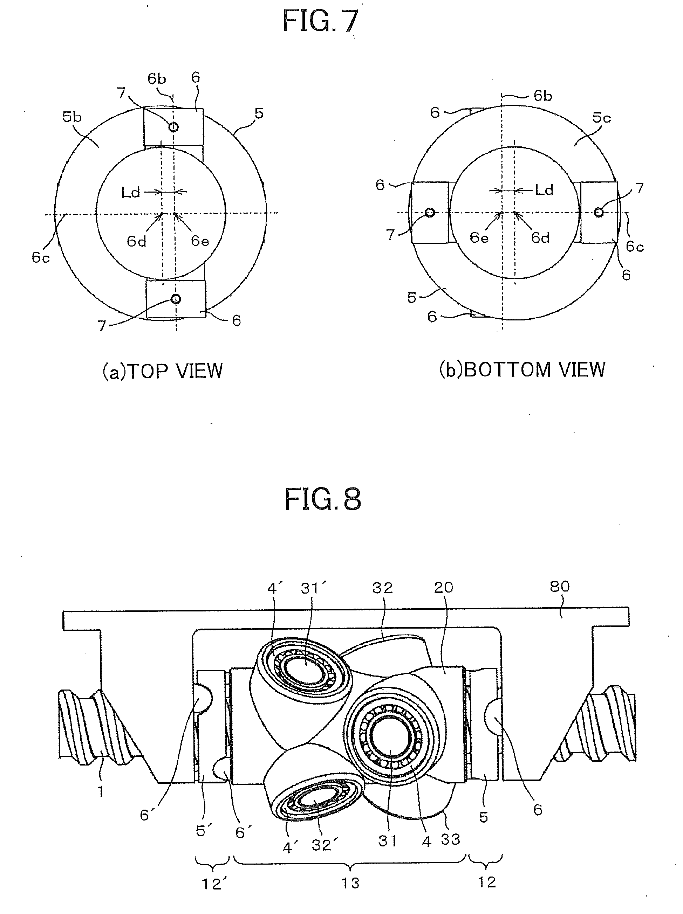

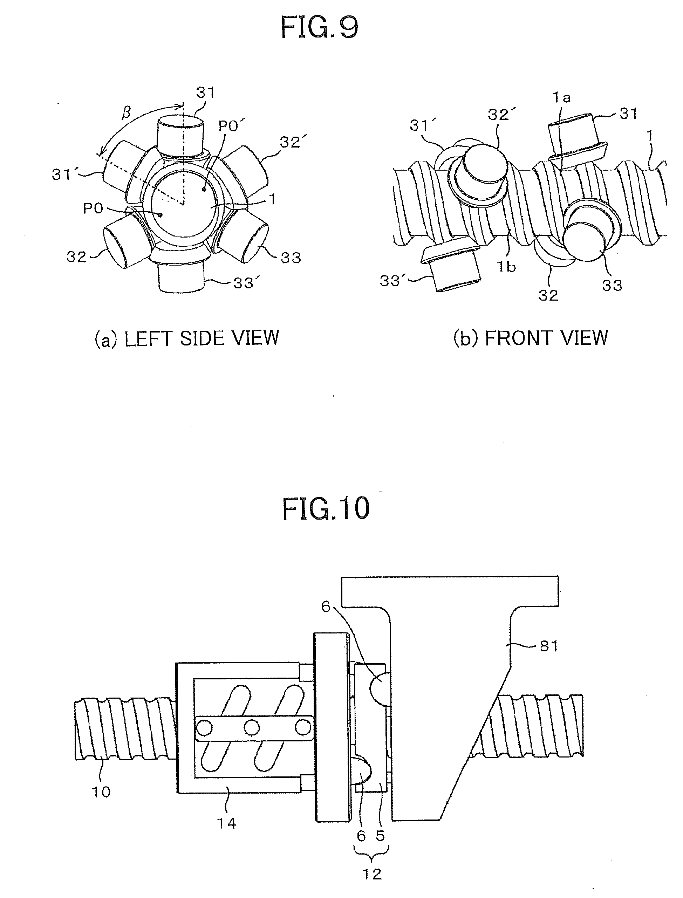

Figs. 1, 2, 3, and 4 show a linear actuator in the first embodiment, Figs. 8 and 9 show a linear actuator in the second embodiment, and Fig. 10 shows a linear actuator in the third embodiment.

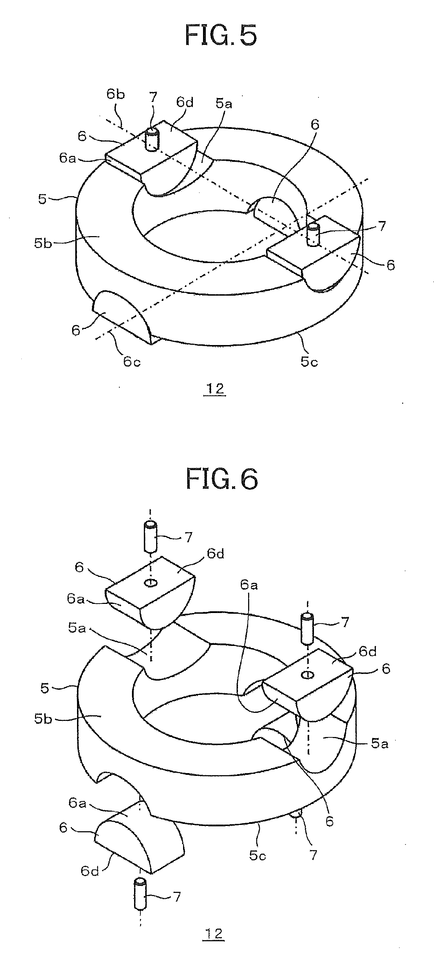

Figs. 5, 6, and 7 show a contact force equalizing mechanism which equalizes the loads applied to the contact portions between the threaded shaft and the nut member in these linear actuators.

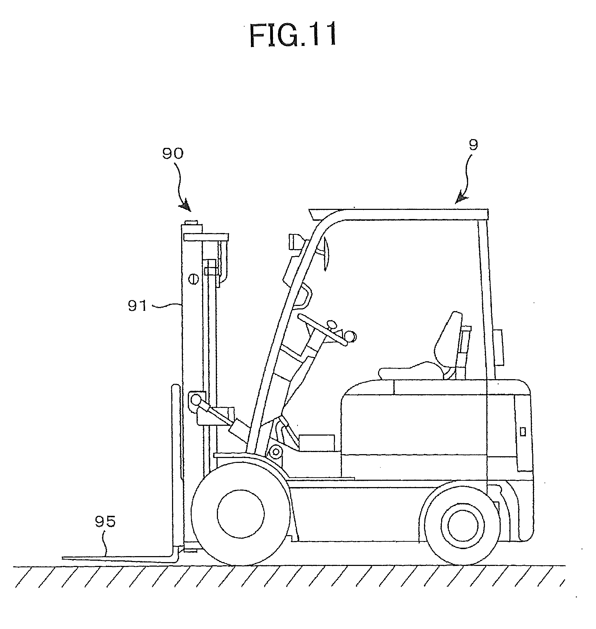

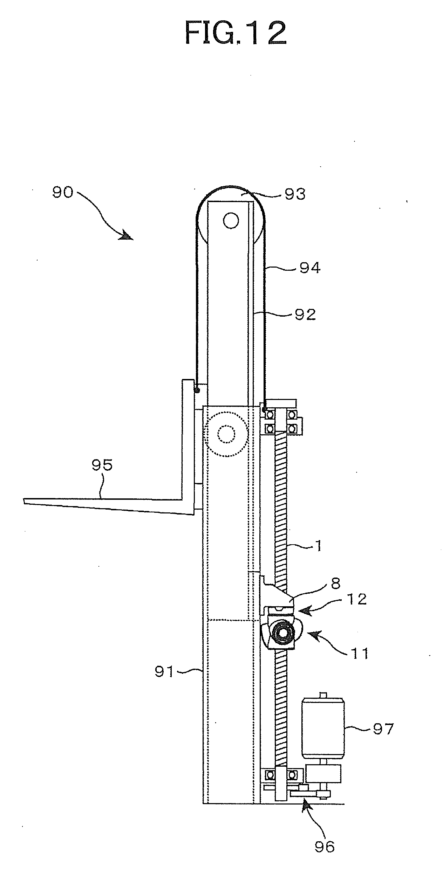

Figs. 11 and 12 show a forklift truck and cargo handling equipment in which a linear actuator is mounted.

First Embodiment

The linear actuator in this embodiment assumes a case that, for example, the threaded shaft is mounted perpendicularly or virtually perpendicularly to the ground and the nut member pushes the driven member against the gravitational force, so a unidirectional load is applied to the nut member.

In other words, it assumes a case that the nut member moves up and down with respect to the threaded shaft.

Fig. 1 shows the external appearance of the linear actuator in the first embodiment.

The linear actuator in this embodiment includes a threaded shaft 1 with a spiral groove formed in the circumferential surface, and a nut member 11 having, as constituent elements, three rollers 31, 32, and 33 (roller 33 is out of the line of vision and not shown in Fig. 1) and a roller cage 2 rotatably supporting the rollers through rolling bearings 4.

The nut member 11 is screwed with the threaded shaft 1 through the three rollers 31, 32, and 33.

The linear actuator further includes, as a constituent element, a contact force equalizing mechanism 12 which prevents the contact forces at plural rolling points in the nut member 11 and threaded shaft 1 from becoming unequal.

The contact force equalizing mechanism 12 has an intermediate member 5 and sliding members 6 as constituent elements.

The threaded shaft 1 and the nut member 11 constitute a rotary to linear conversion mechanism which generates relative linear motion when relative rotary motion is given between them.

For example, when the threaded shaft 1 is rotated by a motor output shaft not shown, if rotation of the nut member 11 is blocked, the nut member 1 is linearly driven.

In the linear actuator, the nut member 11 is connected to the driven member 8 through the contact force equalizing mechanism 12 and is blocked from rotating. Consequently the nut member 11 is linearly driven.

Fig. 2 is a front view of the linear actuator shown in Fig. 1.

Specifically the linear actuator in this embodiment moves left and right in Fig. 2 and when a force is applied from the right to the left in Fig. 2 and a load is transmitted between the nut member 11 and the driven member 8, the load in the direction of compression is transmitted.

The reference signs used in Fig. 2 denote the same constituent elements as the reference signs used in Fig. 1.

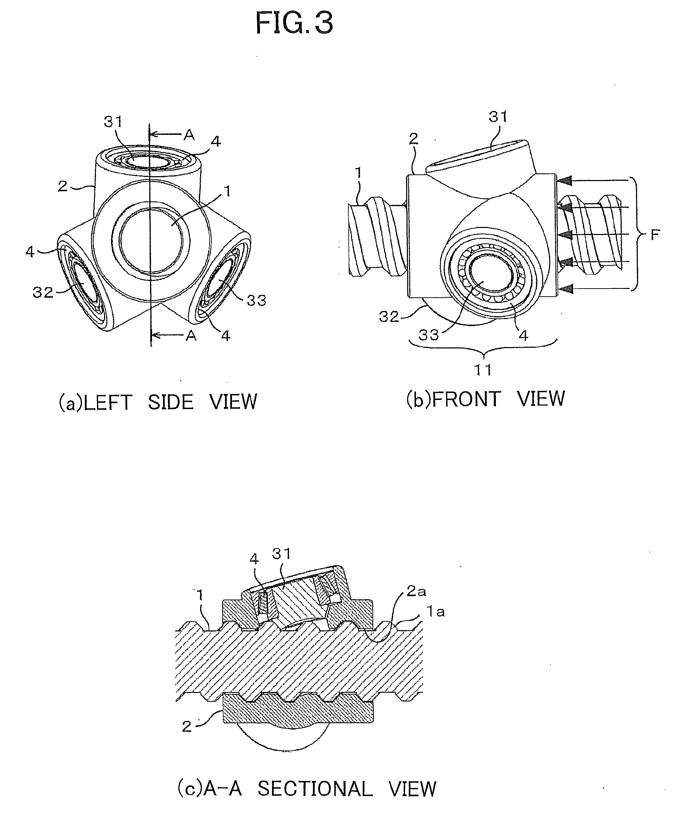

Fig. 3 is a left side view (a) of the roller screw used in the linear actuator shown in Fig. 1, a front view (b) thereof, and a sectional view (c) thereof taken along the line A-A. In short, Fig. 3 shows the roller screw which includes the threaded shaft 1 and the nut member 11 in this embodiment.

As shown in Fig. 3(a), in the nut member 11, the three rollers 31, 32, and 33 are shifted by one third of the lead in the axial direction one by one and as a result, they are shifted by $2/3\,\pi$ in the circumferential direction one by one.

As shown in Fig. 3(b), the moment generated in the nut member 11 can be calculated, assuming that the loads applied to the contact portions between the threaded shaft 1 and the nut member 11 are equal.

The unidirectional load F applied to the nut member 11 is equally applied to the contact portions between the nut member 11 and the threaded shaft 1 through the contact force equalizing mechanism 12 and transmitted to the rollers through the roller cage 2 and rolling bearings 4.

As shown in Fig. 3(c), this roller screw includes as constituent elements: the threaded shaft 1 in which a spiral groove with a trapezoidal sectional profile is formed in the circumference; the three rollers 31, 32, and 33 (rollers 32 and 33 are not shown in Fig. 3(c)) which roll in contact with the right flank face 1a as one inclined face of the spiral groove and oriented right and upward in the spiral groove with a trapezoidal sectional profile, and the roller cage 2 which rotatably supports the rollers through the rolling bearings 4.

As for each roller, the roller's axis of rotation fixed in the roller cage 2 is positioned in a plane crossing the center axis of the threaded shaft 1 at the lead angle of the spiral groove of the threaded shaft 1 and it is inclined toward the outer circumference in that plane on the side of the contact portion where the roller and threaded shaft 1 roll.

The portions of each roller and the threaded shaft 1 which roll by a larger distance, roll together, and the portions which roll by a smaller distance, roll together, and slippage is very slight anywhere on the line of contact between each roller and the threaded shaft 1, so virtually perfect rolling is possible.

In addition, the end face of each roller is inclined with respect to the center axis of the threaded shaft 1 so that interference hardly occurs between a rolling thread for each roller and an adjacent pitch thread.

Furthermore, the rolling plane for each roller is structured so as to occupy an axial range of the threaded shaft 1 beyond an adjacent (next) pitch thread to the thread including the flank face on which the roller rolls, so that the curvature radius of the Hertzian contact portion of each roller is increased, Hertzian stress is reduced and the durability of the rolling portion is improved.

In addition, by making a recess in the end face adjacent to the rolling portion of each roller, interference between the thread at the next pitch and the end face of the roller can be avoided even if the amount of inclination is small in inclining the axis of rotation of each roller toward the outer circumference on the contact portion side where the roller and the threaded shaft 1 roll.

When this inclination amount is small and the rolling portions of the rollers are equal in diameter, the outside diameter of the whole nut can be small.

Figs. 5, 6 and 7 show the contact force equalizing mechanism 12 which equalizes the loads applied to the contact portions between the threaded shaft and the nut member which are formed in the linear actuator in this embodiment.

The reference signs used in Figs. 6 and 7 denote the same constituent elements as the reference signs used in Fig. 5.

Fig. 5 shows the external appearance of the contact force equalizing mechanism which equalizes the loads applied to the contact portions between the threaded shaft and the nut member which are used in the linear actuator shown in Fig. 1.

In Fig. 5, the contact force equalizing mechanism 12 includes as constituent elements: four sliding members 6 which are each comprised of a projecting curved surface (cylindrical curved surface) 6a and a flat surface 6d, are virtually semicylindrical and have a sliding surface on the projecting curved surface 6a; and an intermediate member 5 which is in the shape of a ring with a cylindrical hole in a disc for the threaded shaft 1 to pass through and has recessed curved surfaces 5a corresponding to the projecting curved surfaces 6a of the sliding members 6.

Coupling pin members 7 for coupling with the roller cage 2 of the nut member 11 or the driven member 8 are formed on the sliding members 6.

The cross section of the sliding members 6 is virtually semicircular and their curved surfaces contact the intermediate member 5 and their flat surfaces do not contact the intermediate member 5 so that the load in the direction of compression is transmitted and the load in the tensile direction is not transmitted. Thus, since the cross section of the sliding members 6 is semicircular, the contact force equalizing mechanism 12 can be thin and also since not shear load but compressive load is applied to the sliding members 6, the strength of the contact force equalizing mechanism 12 is increased.

The contact force equalizing mechanism 12 is so arranged that the projecting curved surfaces 6a of the sliding members 6 and the recessed curved surfaces 5a of the intermediate member 5 contact each other and slide and perform swinging motion by sliding along the circumferential direction of the arc.

Regarding the recessed curved surfaces 5a of the intermediate member 5, two ones are formed on each of the upper surface 5b and lower surface 5c and the two recessed curved surfaces 5a on the same surface are formed so that their swing axes are the same as the swing axis 6b (on the upper surface 5b) or swing axis 6c (on the lower surface 5c) of the sliding members 6, namely they are formed on the same swing axis.

Fig. 6 is an exploded view showing the components (constituent elements) of the contact force equalizing mechanism 12 shown in Fig. 5.

A hole in which a coupling pin member 7 is to be inserted is made in the flat surface 6d of a sliding member 6 and the coupling pin member 7 is inserted in it.

Similarly, insertion holes for the coupling pin members 7 are made in the roller cage 2 and driven member 8.

The coupling pin members 7 inserted in the flat surfaces 6d of the sliding members 6 are inserted in the roller cage 2 and driven member 8 so that the sliding members 6 and roller cage 2, and the sliding members 6 and driven member 8, do not get out of alignment in a radial direction.

Consequently the nut member 11 is coupled to the driven member 8 through the contact force equalizing mechanism 12, so the nut member 11 and driven member 8 can swing around an axis perpendicular to the threaded shaft 1 while they cannot make relative rotation around the threaded shaft 1.

The nut member 11 and driven member 8 can move linearly almost in parallel with the rotation axis of the threaded shaft 1 (in the axial direction) but they are limited by a linear guide, etc. not shown so as not to rotate around the rotation axis of the treaded shaft 1.

As a result, as the threaded shaft 1 is rotated by the power of the motor (not shown), the nut member 11 linearly moves relative to the threaded shaft 1 and the driven member 8 moves back and forth almost in parallel with the threaded shaft 1.

Fig. 7 is a top view (a) and a bottom view (b) of the contact force equalizing mechanism 12 shown in Fig. 5.

The swing axis 6b of the sliding members 6 located on the upper surface 5b of the intermediate member 5 and the swing axis 6c of the sliding members 6 located on the lower surface 5c of the intermediate member 5 cross (are perpendicular to) each other or are twisted with respect to each other and the point of intersection 6e obtained when the two swing axes 6b and 6c are projected toward the threaded shaft 1 is away from the center 6d of the intermediate member 5 by distance Ld.

This contact force equalizing mechanism 12 can absorb slight inclination by the two swing axes and since the cross section of the sliding members 6 is semicircular, the contact force equalizing mechanism 12 can be thin and its strength is increased.

Next, the optimum point of application of load (point of intersection 6e) for the nut member 11 will be calculated.

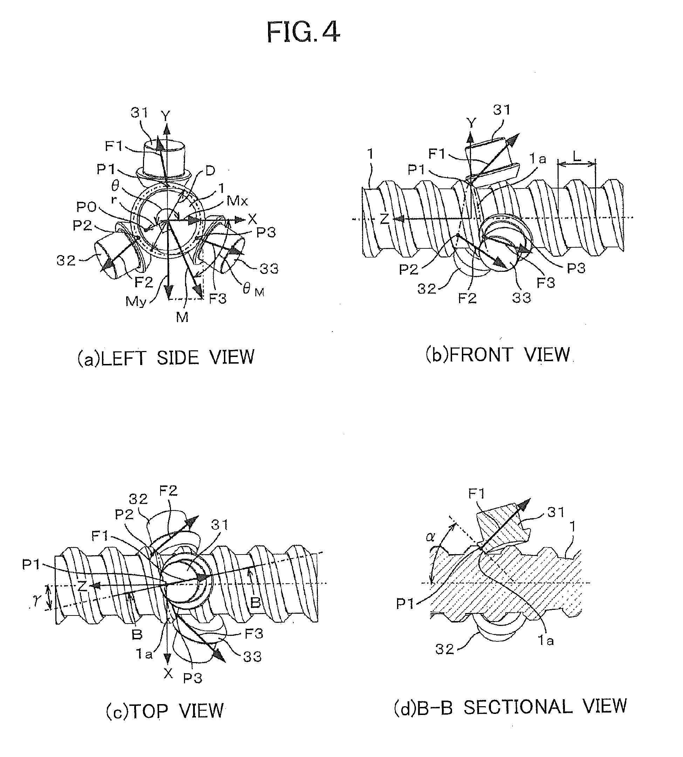

Fig. 4 is a left side view (a), a front view (b), a top view (c) and a sectional view (d) taken along the line B-B showing the threaded shaft and three rollers which are used in the linear actuator shown in Fig. 1.

The optimum point of application of load for the nut member 11 in this embodiment can be calculated as follows. First, in order to calculate the optimum point of application of load, the moment generated in the nut member 11 is calculated on the assumption that the loads applied to the contact portions between the threaded shaft 1 and the nut member 11 are equal.

The unidirectional load F (shown in Fig. 3(b)) applied to the nut member 11 is transmitted to the rollers through the roller cage 2 and rolling bearings 4.

Fig. 4 illustrates resultant forces F1, F2, and F3 of linearly distributed loads which the rollers 31, 32, and 33 receive from the threaded shaft 1 and representative points P1, P2, and P3 to which these forces are applied.

In order to facilitate the explanation given below, Fig. 4 shows X axis, Y axis and Z axis, in which the point P1 in the center in the axial direction among the three points is on the XY plane.

Here the positions of the points P1, P2 and P3 are expressed by the following equation:

[Equation 3]

$$P1 = \left(0, \frac{D}{2}, 0\right), P2 = \left(-\frac{\sqrt{3}D}{4}, -\frac{D}{4}, \frac{L}{3}\right), P3 = \left(\frac{\sqrt{3}D}{4}, -\frac{D}{4}, -\frac{L}{3}\right)$$

... (Equation 3)

where D denotes the diameter of the arrangement of points P1, P2, and P3 (see (a)) and L denotes the lead of the threaded shaft 1 (see (b)).

The resultant force F1 is applied toward the direction of the normal paired with the contact portion tangent tilted at angle $\alpha$ with respect to the XZ plane (see (d)) in a plane tilted at lead angle $\gamma$ with respect to the center axis of the threaded shaft 1 (see (c)).

Similarly the resultant forces F2 and F3 are applied away from the resultant force F1 by one third of the lead L in the Z axis direction for each and at an angle rotated by 120 degrees in the circumferential direction of the threaded shaft 1 for each.

The X component, Y component and Z component of each of the resultant forces F1, F2 and F3 are expressed as follows provided that the loads applied to the contact portions are equal, assuming that the respective forces are equal, or Fn.

[Equation 4]

$$F1_X = -Fn \sin\alpha \sin\gamma$$

... (Equation 4)

[Equation 5]

$$F1_Y = Fn\cos\alpha$$

... (Equation 5)

[Equation 6]

$$F1_Z = -Fn\sin\alpha\cos\gamma$$

... (Equation 6)

[Equation 7]

$$F2_X = Fn(\sin\alpha\sin\gamma - \sqrt{3}\cos\alpha)/2$$

... (Equation 7)

[Equation 8]

$$F2_Y = -Fn(\sqrt{3}\sin\alpha\sin\gamma + \cos\alpha)/2$$

... (Equation 8)

[Equation 9]

$$F2_Z = -Fn\sin\alpha\cos\gamma$$

... (Equation 9)

[Equation 10]

$$F3_X = Fn(\sin\alpha\sin\gamma + \sqrt{3}\cos\alpha)/2$$

... (Equation 10)

[Equation 11]

$$F3_Y = Fn(\sqrt{3}\sin\alpha\sin\gamma - \cos\alpha)$$

... (Equation 11)

[Equation 12]

$$F3_Z = -Fn\sin\alpha\cos\gamma$$

... (Equation 12)

The unidirectional load F applied to the nut member 11 is equal to the sum of the Z components of the forces applied to three contact portions, so
[Equation 13]

$$F1_Z + F2_Z + F3_Z = F$$

... (Equation 13)

Thus Fn is expressed as follows:
[Equation 14]

$$Fn = \frac{F}{3\sin\alpha\cos\gamma}$$

... (Equation 14)

The moment M (see (a)) generated by the three resultant forces F1, F2, and F3 can be expressed as the combination of moment Mx around the X axis and moment My around the Y axis as follows:
[Equation 15]

$$Mx = -F2_Y\frac{L}{3} + F3_Y\frac{L}{3} + F1_Z\frac{D}{2} - F2_Z\frac{D}{2}\sin\frac{\pi}{6} - F3_Z\frac{D}{2}\sin\frac{\pi}{6}$$

... (Equation 15)

[Equation 16]

$$My = F2_x\frac{L}{3} - F3_x\frac{L}{3} + F2_z\frac{D}{2}\cos\frac{\pi}{6} - F3_z\frac{D}{2}\cos\frac{\pi}{6}$$

... (Equation 16)

[Equation 17]

$$M = \sqrt{Mx^2 + My^2}$$

... (Equation 17)

The following calculations are made by substituting the components of the resultant forces F1, F2, and F3, and Fn into the above equation.

[Equation 18]

$$Mx = \frac{\sqrt{3}FLtan\gamma}{9}, My = -\frac{\sqrt{3}FL}{9tan\alpha cos\gamma}, M = \frac{\sqrt{3}FL}{9sin\alpha}\sqrt{tan^2\gamma + cos^2\alpha}$$

... (Equation 18)

In addition, the angle $\theta_M$ (see (a)) of the moment M with respect to the rotation axis is
[Equation 19]

$$\theta_M = tan^{-1}\frac{My}{Mx} = tan^{-1}\frac{-cos\alpha}{sin\alpha sin\gamma}$$

... (Equation 19)

expressed as above.
The optimum point of application of load P0 (see (a)) of the nut member 11 is the point of application of load which offsets the moment M generated in the nut member 11 and can be expressed in terms of distance r from the Z axis (see (a)) and angle θ around the Z axis (see (a)) as follows:
[Equation 20]

$$r = \frac{M}{F} = \frac{\sqrt{3}L}{9\sin\alpha} \sqrt{\tan^2\gamma + \cos^2\alpha}$$

... (Equation 20)

[Equation 21]

$$\theta = \theta_M - \frac{\pi}{2}$$

... (Equation 21)

The center 6d (see Figs. 7) of the contact force equalizing mechanism 12 is on the center axis of the threaded shaft 1 and it is preferable that the dimension Ld in Figs. 7 be equal to the distance r in Figs. 4.

The contact force equalizing mechanism 12 is fitted to the nut member 11 by the coupling pin members 7 so that 6e in Figs. 7 is in the direction of angle θ with respect to the roller cage 2.

In other words, the external force to be applied to the nut member 11 is transmitted through the contact force equalizing mechanism 12 and at this time the external force is applied to the point of intersection 6e as the optimum point of application of load P0, so the loads applied to the three contact portions between the threaded shaft 1 and the nut member 11 are almost completely equalized.

In addition, slight inclination between the nut member 11 and the driven member 8 can be absorbed by the swinging motion of the two swing axes of the contact force equalizing mechanism 12, so even if there is slight inclination, the optimum point of application of load P0 almost coincides with the point of intersection 6e.

When the optimum point of application of load P0 and the point of intersection 6e coincide, a large effect (for example, 15 years of linear actuator service life) can be achieved; on the other hand, even when the optimum point of application of load P0 and the point of intersection 6e do not coincide, a given effect (for example, 10 years of linear actuator service life) can be achieved.

In other words, a given effect can be achieved by setting the point of intersection 6e in a position away from the center 6d of the intermediate member 5 (shifting it from the center axis of the threaded shaft 1 in a radial direction) and setting the point of intersection 6e as close to the optimum point of application of load P0 as possible.

Therefore, as shown in Fig. 1, the linear actuator shown in the first embodiment includes the threaded shaft 1, the nut member 11 which is screwed with the threaded shaft 1 and has a roller screw mechanism to contact the threaded shaft 1 through the three rotatably supported rollers 31, 32, and 33, the driven member 8 coupled to the object to be driven, and the contact force equalizing mechanism 12 which couples the nut member 11 and the driven member 8 and has two rotation axes (6b, 6c) in a mutually twisted positional relationship as shown in Fig. 5.

The nut member 11 is moved back and forth in the direction of the threaded shaft 1 by rotary motion relative to the threaded shaft 1, and linear motion is given to the object to be driven by the forward and backward movements of the nut member 11 through the contact force equalizing mechanism 12 and the driven member 8.

Therefore, a feature of the linear actuator shown in the first embodiment is that the point of intersection (6e) obtained when the two rotation axes of the contact force equalizing mechanism 12 are projected toward the threaded shaft 1 is shifted from the rotation axis of the threaded shaft 1 virtually toward the roller among the three rollers which is at the forefront in the forward moving direction of the nut member 11.

Here, the forward moving direction in forward/backward movement is the plus direction of the Z axis shown in Fig. 4(b) (from the left to the right in the drawing). Namely, forward movement is movement in the direction in which the inclination angle of the rollers 31, 32, and 33 is an acute angle.

Another feature of the linear actuator shown in the first embodiment is that the point of intersection (6e) obtained when the two rotation axes of the contact force equalizing mechanism 12 are projected toward the threaded shaft 1 is shifted from the rotation axis of the threaded shaft 1 virtually toward the roller among the three rollers which is at the tail end in the backward moving direction of the nut member 11.

Here, the backward moving direction in forward/backward movement is the minus direction of the Z axis shown in Fig. 4(b) (from the right to the left in the drawing). Namely, backward movement is movement in the direction in which the inclination angle of the rollers 31, 32, and 33 is an obtuse angle.

This substantially prevents the loads applied to the three contact portions between the threaded shaft 1 and the nut member 11 from being unequal.

The use of the rotary to linear conversion mechanism in this embodiment, which ensures that the external force applied to the nut member is equally applied to the contact portions between the nut member and threaded shaft, suppresses the possibility that the contact forces applied to plural rolling portions of the threaded shaft and the nut member are unequal.

Therefore, the service life of the linear actuator which uses the rotary to linear conversion mechanism can be lengthened and as a secondary effect, noise can be prevented.

Next, a forklift truck in which the linear actuator shown in this embodiment is mounted will be described.

Fig. 11 is a side view of the forklift truck in which the linear actuator is mounted.

In Fig. 11, the forklift truck includes a vehicle body 9 in which traveling equipment and cargo handling equipment, etc. are mounted, and a loading/unloading device 90 installed in front of the vehicle body 9.

The loading/unloading device 90 includes a fork 95 for holding a cargo, etc. and an outer mast 91 as a column for moving the fork 95 up and down.

Fig. 12 is an enlarged view of the loading/unloading device of the forklift truck shown in Fig. 11.

In Fig, 12, the loading/unloading device 90 includes an outer mast 91, an inner mast 92 which is installed inside the outer mast 91 and ascends and descends along the outer mast 91, a chain wheel 93 installed on the top of the inner mast 92, a lift chain 94 with one end connected to the outer mast 91 and the other end connected to the fork 95 through the chain wheel 93, and a linear actuator which moves up and down (lifts and lowers) the inner mast 92.

The loading/unloading device 90 includes the fork 95 which is installed on the inner mast 92 and ascends and descends in conjunction with the upward and downward movements of the inner mast 92.

The linear actuator includes a threaded shaft 1 rotatably supported on the outer mast 91, a nut member 11 screwed with the threaded shaft 1, a driven member 8 fixed on the inner mast 92, and a contact force equalizing mechanism 12 located between the nut member 11 and the driven member 8.

The threaded shaft 1 is connected to a motor 97 through plural gears 96 and the threaded shaft 1 is rotated by the driving force of the motor 97.

The nut member 11 is coupled to the driven member 8 through the contact force equalizing mechanism 12 and coupled around the rotation axis of the threaded shaft 1 in a way that it cannot rotate.

Therefore, as the threaded shaft 1 rotates, the nut member moves linearly. The linear motion of the nut member 11 is transmitted to the inner mast 92 through the contact force equalizing mechanism 12 and the driven member 8.

Therefore, the nut member 11 is moved linearly by the driving force of the motor 97 and according to the linear motion of the nut member 11, the inner mast 92 is lifted or lowered.

As the inner mast 92 ascends or descends, the chain wheel 93 also ascends or descends at the same time. Since the chain wheel 93 functions as a movable pulley, the fork 95 ascends or descends at a speed which is twice higher than the speed of the inner mast 92.

The loading/unloading device 90 can move the fork 95 up and down by driving the motor 97, so the loading/ unloading device 90 can be used for a forklift truck.

When the object to be handled is loaded on the fork 95, due to the weight of the object the inner mast 92 slightly inclines and the driven member 8 fixed on the inner mast 92 also slightly inclines, and the nut member 11 also slightly inclines together with the driven member 11.

However, this slight inclination is absorbed by the contact force equalizing mechanism 12, so no edge load or the like does not occur in the nut member 11.

In addition, since the contact force equalizing mechanism 12 enables the load transmitted from the driven member 8 to the nut member 11 to act on the optimum point of application of load for the nut member 11, the loads applied to the contact portions between the nut member 11 and the threaded shaft 1 are equalized, preventing an excessive load from being applied to a certain contact portion.

Consequently the service life of the linear actuator is lengthened.

In other words, as in this embodiment, the electric linear actuator may be used as an actuator for a forklift truck in which a hydraulic actuator has been generally used in the past.

If the electric linear actuator is used for a forklift truck in this way, the following advantages may be brought about.

-    The mechanical efficiency is higher than when a hydraulic actuator is used, leading to energy saving.

- The electric linear actuator ensures energy saving since it can regenerate power.

- The electric linear actuator can realize an oilless forklift truck, so it can reduce environmental impact such as contamination and may be used in an environment in which it is difficult to use a hydraulic actuator, such as a food factory.

The forklift truck shown in this embodiment, namely a forklift truck in which a linear actuator using the contact force equalizing mechanism is mounted, brings about the following advantages:
- The use of the contact force equalizing mechanism makes it possible that equal loads are applied to rollers, leading to a longer service life.

- The use of the contact force equalizing mechanism increases the mechanical efficiency as compared with a case that it is not used, leading to energy saving.

Second Embodiment

Next the second embodiment will be described referring to Fig. 8.
Fig. 8 is an external view of the linear actuator in the second embodiment.
The linear actuator includes a threaded shaft 1 with a spiral groove formed in the circumferential surface, a nut member 13 which is screwed with the threaded shaft 1 and has, as constituent elements, six rollers 31, 32 and 33 and 31', 32' and 33' (roller 33' is out of the line of vision and not shown in Fig. 8) and a roller cage 20 rotatably supporting the rollers through rolling bearings 4 and 4', and contact force equalizing mechanisms (eccentric load preventing mechanisms) 12 and 12' which prevent an eccentric load from occurring in the nut member 13.
The contact force equalizing mechanisms (eccentric load preventing mechanisms) 12 and 12' include intermediate members 5 and 5' and sliding members 6 and 6' respectively.
The threaded shaft 1 and the nut member 13 constitute a rotary to linear conversion mechanism which generates relative linear motion when relative rotary motion is given between them.
The threaded shaft 1 is connected to a motor output shaft not shown and the nut member 13 is connected to the driven member 80 through the contact force equalizing mechanisms 12 and 12'.
The contact force equalizing mechanisms 12 and 12' are the same as the contact force equalizing mechanism 12 described in the first embodiment.
This constitution prevents or reduces an eccentric load even if loads are applied to the nut member 13 in two directions.
Fig. 9 is a left side view (a) and a front view (b) showing the threaded shaft and six rollers which are used in the linear actuator shown in Fig. 8.
Fig. 9 shows the relation between the threaded shaft 1 and the nut member 13 and for the convenience of explanation, the roller cage 20 and rolling bearings 4 and 4' are omitted in the drawing.
The nut member 13 is a combination of two pieces of the nut member 11 in the first embodiment.
One nut member is rotated by 180 degrees with respect to the other nut member around the X or Y axis which is perpendicular to the threaded shaft 1, namely the two nut members are installed facing each other.
Furthermore, the two nut members are installed with rotation angle β between them around the center axis of the threaded shaft 1 (see (a)).
The six rollers are arranged so that one group of three rollers 31, 32, and 33 contact the right flank face 1a of the threaded shaft 1 and the other group of three rollers 31', 32', and 33' contact the left flank face 1b of the threaded shaft 1 (see (b)).
Due to this arrangement, the nut member 13 can support loads in both directions of movement (for example, forward/backward or left/right movement on a plane), so it may also be used in a case that loads are applied to the driven member 80 in both directions.
Also, when left-directed load F is applied to the driven member 80 in Fig. 8, the load is transmitted from the driven member 80 to the nut member 13 through the contact force equalizing mechanism 12 and the load is applied to the threaded shaft 1 by the three rollers 31, 32, and 33.
At this time, in the contact force equalizing mechanism 12', the sliding members 6' are not coupled to the intermediate member 5' and only compressive load is transmitted, so the load is not transmitted from the driven member 80 to the nut member 13 through the contact force equalizing mechanism 12'.

When right-directed load F' is applied to the driven member 80 in Fig. 8, the load is transmitted from the driven member 80 to the nut member 13 through the contact force equalizing mechanism 12' and the load is applied to the threaded shaft 1 by the three rollers 31', 32', and 33'.

At this time, in the contact force equalizing mechanism 12, the sliding members 6 are not coupled to the intermediate member 5 and only compressive load is transmitted, so the load is not transmitted from the driven member 80 to the nut member 13 through the contact force equalizing mechanism 12.

The optimum point of application of load P0 is determined according to the condition of contact between the one group of three rollers 31, 32, and 33 and the threaded shaft 1 as indicated in the first embodiment and the optimum point of application of load PO' is determined according to the condition of contact between the other group of three rollers 31', 32', and 33' and the threaded shaft 1 as indicated in the first embodiment.

As for distance r and angle $\theta$ which express the optimum point of application of load in the first embodiment, these two optimum points of application of load (P0, P0') are equal in terms of distance r but they are not always equal and are often different in terms of angle $\theta$.

For this reason, the optimum point of application of load is different between the case that the one group of rollers 31, 32, and 33 receive a load, namely left-directed load F is applied to the driven member 80, and the case that the other group of rollers 31', 32', and 33' receive a load, namely right-directed load F' is applied to the driven member 80.

Therefore, in this embodiment, in order to let a load be applied to the optimum point of application of load which differs according to the direction of the load, two contact force equalizing mechanisms which transmit compressive load are provided on both sides of the nut member 13.

Regardless of the direction of the load applied to the driven member 80, this constitution prevents or reduces an eccentric load which occurs in the nut member 13.

The linear actuator shown in this embodiment, namely a linear actuator which uses contact force equalizing mechanisms, may be used instead of a conventional hydraulic cylinder not only in forklift trucks. This type of linear actuator may be used in construction machines; for example, it may be formed at the tip of the arm of a power shovel in a mechanism to drive the bucket.

The linear actuator in this embodiment is suitable, for example, for a case that the threaded shaft 1 is installed horizontally and the nut member 13 is driven horizontally. Also it is suitable for a case that the nut member 13 receives loads in both the forward and backward moving directions with respect to the threaded shaft 1.

Third Embodiment

Next the third embodiment will be described referring to Fig. 10.

Fig. 10 shows the external appearance of the linear actuator in the third embodiment.

In the third embodiment, the roller screw in the first embodiment is replaced by a ball screw.

Specifically, the nut member 11 in the first embodiment is replaced by a nut member 14 for a ball screw and the threaded shaft 1 in the first embodiment is replaced by a threaded shaft 10 for a ball screw.

Even when an ordinary ball screw is used in the linear actuator, the optimum point of application of load can be calculated according to the condition of contact between the balls as rolling bodies and the ball screw threaded shaft 10, using the method suggested in the first embodiment.

In calculating the optimum point of application of load in the case of using the ball screw, the calculation is made taking the number of balls per rotation of the ball screw threaded shaft 10 into consideration because each ball acts on the ball screw threaded shaft 10 on a point-by-point basis.

In the third embodiment as well, the contact force equalizing mechanism (eccentric load preventing mechanism) 12 can let a load be applied to the optimum point of application of load for the ball screw nut member 14 and is installed between the driven member 81 and the ball screw nut member 14.

REFERENCE SIGNS LEST

| | |
|---|---|
| 1, 10... | Threaded screw |
| 2, 20... | Roller cage |
| 4, 4'... | Rolling bearing |
| 5, 5'... | Intermediate member |
| 6, 6'... | Sliding member |
| 7... | Coupling pin member |

| | |
|---|---|
| 8, 80, 81... | Driven member |
| 9... | Vehicle body |
| 11, 13, 14... | Nut member |
| 12, 12'... | Contact force equalizing mechanism |
| 31, 31', 32, 32', 33, 33'... | Roller |
| 90... | Loading/unloading device |
| 91... | Outer mast |
| 92... | Inner mast |
| 93... | Chain wheel |
| 94... | Lift chain |
| 95... | Fork |
| 96... | Gear |
| 97... | Motor |

**Claims**

1. A linear actuator comprising a threaded shaft, a nut member screwed with the threaded shaft, a driven member coupled to an object to be driven, and a coupler for coupling the nut member and the driven member,
   the linear actuator moving the nut member back and forth in an axial direction by rotary motion relative to the threaded shaft and driving the object to be driven in the axial direction by forward and backward movements of the nut member through the coupler and the driven member,
   wherein the coupler has two rotation axes virtually perpendicular to each other and a point of intersection obtained when the two rotation axes are projected toward the threaded shaft is shifted from a center axis of the threaded shaft in a radial direction.

2. The linear actuator according to Claim 1,
   wherein the threaded shaft and the nut member contact each other through a plurality of rollers rotatably supported by the nut member and constitute a roller screw mechanism based on rolling pairing.

3. The linear actuator according to Claim 2,
   wherein the number of rollers which transmit a thrust load from one direction to the threaded shaft is three and they are arranged so that they are shifted about one third of screw lead in the axial direction one by one and shifted 2/3 n [rad] in a circumferential direction one by one.

4. The linear actuator according to Claim 3,
   wherein, when it is defined that the rotation axis of the threaded shaft is a Z axis, an axis passing through a center of a contact portion between a central roller in the axial direction among the three rollers and the threaded shaft and being perpendicular to the Z axis is a Y axis, an axis perpendicular to both the Z axis and the Y axis is an X axis,
   lead of the threaded shaft is L [mm], lead angle of a spiral passing through a contact portion between a roller and a thread flank face is $\gamma$ [rad], and an angle which is formed by a tangent in the vicinity of a center of a contact portion between a thread flank face on a plane rotated around the Y axis by $\gamma$ from a YZ plane and a roller, and an XZ plane, is $\alpha$ [rad],
   the point of intersection obtained when the two rotation axes of the coupler are projected toward the threaded shaft is at a distance from the Z axis in the radial direction, the distance being approximately expressed below:

   [Equation 1]

   $$\frac{\sqrt{3}L}{9\sin\alpha}\sqrt{\tan^2\gamma + \cos^2\alpha}\,[\text{mm}]$$

   and it has an angle around the Z axis from the X axis, the angle being approximately expressed below:

[Equation 2]

$$\tan^{-1}\frac{-\cos\alpha}{\sin\alpha\sin\gamma} - \frac{\pi}{2}\,[\text{rad}]$$

**5.** An electric forklift truck which uses the linear actuator according to Claim 1 for lifting and lowering.

**6.** The linear actuator according to Claim 1,
wherein in transmitting a load between the nut member and the driven member, a load in a direction of compression is transmitted and a load in a tensile direction is not transmitted.

**7.** The linear actuator according to Claim 1,
wherein two couplers are coupled on both sides of the nut member in directions of forward and backward movements and the two couplers are coupled to the same driven member.

**8.** A linear actuator comprising a threaded shaft, a nut member screwed with the threaded shaft and having a roller screw mechanism in contact with the threaded shaft through rotatably supported three rollers, a driven member coupled to an object to be driven, and a coupler for coupling the nut member and the driven member,
the linear actuator moving the nut member back and forth in an axial direction by rotary motion relative to the threaded shaft and giving linear motion to the object to be driven by forward and backward movements of the nut member through the coupler and the driven member,
wherein the coupler has two rotation axes which are in a mutually twisted positional relationship and a point of intersection obtained when the two rotation axes are projected toward the threaded shaft is shifted from a rotation axis of the threaded shaft toward a roller at the forefront among the three rollers in a forward movement direction of the nut member.

**9.** An electric forklift truck which uses the linear actuator according to Claim 8 for lifting and lowering.

# FIG. 1

# FIG. 2

# FIG.3

(a)LEFT SIDE VIEW

(b)FRONT VIEW

(c)A-A SECTIONAL VIEW

# FIG.4

(a)LEFT SIDE VIEW

(b)FRONT VIEW

(c)TOP VIEW

(d)B-B SECTIONAL VIEW

# FIG.5

12

# FIG.6

12

# FIG. 7

(a)TOP VIEW

(b)BOTTOM VIEW

# FIG. 8

# FIG.9

(a) LEFT SIDE VIEW                    (b) FRONT VIEW

# FIG.10

# FIG.11

# FIG.12

## INTERNATIONAL SEARCH REPORT

| | International application No. |
|---|---|
| | PCT/JP2010/064014 |

**A. CLASSIFICATION OF SUBJECT MATTER**
*F16H25/24*(2006.01)i, *B66F9/08*(2006.01)i

According to International Patent Classification (IPC) or to both national classification and IPC

**B. FIELDS SEARCHED**

Minimum documentation searched (classification system followed by classification symbols)
F16H25/24, B66F9/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 63-290988 A (Hitachi Electronics Engineering Co., Ltd.), 28 November 1988 (28.11.1988), page 3, upper right column, line 8 to page 4, upper right column, line 17; fig. 1 to 5 (Family: none) | 1-9 |
| A | JP 8-270649 A (THK Co., Ltd.), 15 October 1996 (15.10.1996), paragraphs [0028] to [0038]; fig. 1, 2 (Family: none) | 1-9 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 November, 2010 (09.11.10) | 22 November, 2010 (22.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/064014

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 27827/1991(Laid-open No. 117247/1992) (Pentel Co., Ltd.), 20 October 1992 (20.10.1992), specification, paragraphs [0008] to [0011]; fig. 1 to 3 (Family: none) | 1-9 |
| A | JP 2009-79653 A (NTN Corp.), 16 April 2009 (16.04.2009), paragraph [0028]; fig. 1, 3 (Family: none) | 1-9 |
| A | FR 526586 A (MORS ELECTRICITE), 11 October 1921 (11.10.1921), fig. 1, 2 (Family: none) | 2,3,4,8 |
| A | JP 8-12288 A (Meidensha Corp.), 16 January 1996 (16.01.1996), paragraph [0029]; fig. 6 to 9 (Family: none) | 5,9 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI031991228538 A
- JP 2003307264 A
- JP HEI051993066360 U
- JP 2002327826 A